# EUROPÄISCHE PATENTSCHRIFT

(11) **EP 1 200 749 B1**
(45) Veröffentlichungstag und Bekanntmachung des Hinweises auf die Patenterteilung: **21.01.2004**
(21) Anmeldenummer: 00947952.8
(22) Anmeldetag: 07.07.2000
(51) Int. Cl.: F16C 29/06

(54) **LINEARWÄLZLAGER**
LINEAR ROLLER BEARING
PALIER A BILLES LINEAIRE

(30) Priorität: 06.08.1999 DE 19937278
(43) Veröffentlichungstag der Anmeldung: 02.05.2002
(73) Patentinhaber: INA-Schaeffler KG, 91074 Herzogenaurach (DE)
(72) Erfinder: BAALMANN, Klaus, D-66424 Homburg (DE); DANNECK, Uwe, D-66564 Ottweiler (DE); JELINEK, Kai, D-66894 Rosenkopf (DE); KLEIN, Udo, D-67742 Adenbach (DE); SCHEIB, Frank, D-66540 Neunkirchen (DE); WINKLER, Thomas, D-66280 Sulzbach (DE)
(86) Internationale Anmeldenummer: PCT/EP2000/006477
(87) Internationale Veröffentlichungsnummer: WO 2001/011251

(56) Entgegenhaltungen:
- EP-A- 0 323 718
- WO-A-97/01713
- WO-A-98/21494
- DE-A- 3 507 760
- DE-A- 4 210 039
- US-A- 4 456 312

## Beschreibung

### Gebiet der Erfindung

Die Erfindung betrifft ein Linearwälzlager mit mehreren Kugelumläufen, welche eine Führungsschiene umgebend in Umfangsrichtung hintereinander angeordnet sind, wobei jeweils mindestens ein Kugelumlauf, bestehend aus einem Tragabschnitt, einem Rücklaufabschnitt und zwei diese Abschnitte miteinander verbindenden Umlenkabschnitten, in einem Käfigsegmentgehäuse gehalten ist, das von einem inneren Käfigteil und einem äußeren Käfigteil gebildet ist und ein in einem Durchbruch des äußeren Käfigteils passend eingesetztes Tragbahnelement enthält, wobei ferner die Kugeln des Tragabschnitts einerseits an einer Laufbahn des Tragbahnelementes und andererseits durch einen Schlitz des inneren Käfigteils hindurchragend an der Führungsschiene in deren Längsrichtung abrollbar abgestützt sind.

Ein solches Lager besitzt eine optimale Anpassung des Kugellaufs an sich während des Betriebes verändernde Bedingungen, wie Durchbiegungen, und auch an lokal unterschiedliche Bedingungen, wie z. B. Unrundheit der Führungsschiene. Die Kugeln, die Tragbahnelemente und auch die Kugelrückführungsbahnen stellen sich hierbei immer synchron zur Führungsschiene ein, so daß sich die Vorteile einer geringen Verschiebekraft und eines geräuscharm, hakelfrei und verschleißarm arbeitenden Lagers ergeben, welches weitgehend wartungsfrei ist.

### Hintergrund der Erfindung

Ein Linearwälzlager der eingangs genannten Art für die Bewegung längs einer Welle geht aus dem Dokument WO 97/01 713 hervor. Dort grenzen drei Käfigsegmentgehäuse in Umfangsrichtung unmittelbar aneinander an und benötigen ineinander eingreifbare Strukturen ihrer angrenzenden Berührungsflächen.

Beim Herausnehmen eines Käfigsegmentgehäuses verlieren daher die übrigen beiden Gehäuse ihren festen Halt in Umfangsrichtung.

Aus dem Dokument DE 42 10 039 A1 ist ebenfalls ein Linearwälzlager bekannt, bei welchem mehrere Käfigsegmentgehäuse in Umfangsrichtung einer Führungsschiene hintereinander angeordnet sind und unmittelbar aneinander angrenzen. Um eine Einstellbarkeit der Tragbahnelemente auf die Führungsschiene zu ermöglichen, weisen die in Umfangsrichtung aufeinander folgenden Käfigsegmentgehäuse federnde Zungen auf, mit welchen sie einander gegenüber nachgiebig sich einstellend abgestützt sind. Für den Zusammenhalt aller Käfigsegmentgehäuse sind hier zwei stirnseitig angeordnete ringförmige Halteelemente erforderlich. Auch bei dieser Ausführung verlieren daher beim Entfernen der Halteelemente und Herausnehmen eines Käfigsegmentgehäuses die übrigen Gehäuse ihren festen Halt. Das Auswechseln eines einzelnen Gehäuses ist daher erschwert.

Das Dokument WO 98/21 494 zeigt eine einstückige Käfighülse mit von außen zugänglichen Räumen für die Unterbringung von Kugelumläufen und Tragbahnelementen, so daß hier die Möglichkeit, einzelne Kugelumläufe mit ihren Laufbahnen in einfacher Weise auszuwechseln, nicht gegeben ist.

### Zusammenfassung der Erfindung

Der Erfindung liegt die Aufgabe zugrunde, ein Lager zu schaffen, welches es ermöglicht, einzelne Käfigsegmentgehäuse in das Lager einzusetzen oder dort auszuwechseln, wenn es sich mit der Führungsschiene im montierten Zustand befindet, ohne die optimale Positionierung der Käfigsegmentgehäuse auf der Führungsschiene, ihre Beweglichkeit oder ihre Haltefunktion beim Transport zu beeinträchtigen.

Diese Aufgabe wird erfindungsgemäß dadurch gelöst, daß jedes Käfigsegmentgehäuse einzeln in einer Ausnehmung einer die Führungsschiene umgebenden kreiszylindrischen Käfighülse in radialer Richtung einsetzbar und herausnehmbar angeordnet ist. Die Käfighülse besitzt vom Außenumfang zugängliche Ausnehmungen, in die also jeweils ein Käfigsegmentgehäuse radial zur Führungsschiene hin eingesetzt werden kann.

Das innere Käfigteil kann an seinen beiden in Längsrichtung der Führungsschiene weisenden Stirnseiten je eine abstehende Noppe aufweisen, welche in einer ihr zugeordneten Aussparung der Käfighülse eingerastet ist. Damit sind die einzelnen Käfigsegmentgehäuse in die Käfighülse so eingehängt worden, daß sie voneinander unabhängig frei beweglich sind. Die Einhängung der Gehäuse in die Käfighülse erfolgt mit den Noppen in die dafür vorgesehenen Aussparungen.

Die Käfighülse kann eine in die jeweilige Aussparung hineinragende, in radialer Richtung der Hülse auf die eingerastete Noppe einwirkende Federlippe aufweisen. Die Federlippe drückt jeweils das Käfigsegmentgehäuse auch im unbelasteten Zustand an die Führungsschiene, so daß dem Gehäuse eine definierte Stellung vorgegeben wird. Bei Lastwechseln oder beim plötzlichen Einsatz der Betriebslast sind alle Käfigsegmentgehäuse dann schon richtig ausgerichtet. Insbesondere kann damit auch ein Klappern der Lagerteile vermieden werden.

Die einzelnen Gehäuse können, wie aus der Zeichnung hervorgeht, jeweils um eine gedachte Achse A-A, die durch die beiden zugehörigen Aussparungen für die Noppen verläuft, vollständig (um 360°) beweglich sein. Ihre Beweglichkeit um eine gedachte Achse B-B, die radial von der Führungsschiene ausgehend zentral durch das Tragbahnelement verläuft (axiale Ausrichtung) ist eingeschränkt, ebenso ihre Beweglichkeit um eine gedachte Achse C-C, die tangential zur Führungsschiene mittig durch das jeweilige Tragbahnelement verläuft. In radialer Richtung der Führungsschiene ist die Beweglichkeit ebenfalls eingeschränkt. Sie ist teilweise dadurch gegeben bzw. eingeschränkt, daß die Aussparungen einen größeren Durchmesser haben als die sich darin einlegenden Noppen. Über die Kraftwirkungskette "belastete Kugeln - Tragbahnelement - Käfigsegmentgehäuse - unbelastete Kugeln" stellt sich jedes einzelne Gehäuse völlig unabhängig von den anderen Segmentgehäusen auf die Führungsschiene ein. Da sich die einzelnen Segmentgehäuse jeweils so bewegen können, daß sie sich an den Verlauf der Führungsschiene anpassen, entsteht gleichzeitig eine Relativbewegung der Käfigsegmentgehäuse in bezug auf ein die Käfighülse aufnehmendes, zu bewegendes Maschinengehäuse. Dies wird dadurch ermöglicht, daß die Tragbahnelemente einen in zwei Richtungen gerundeten Rücken haben und damit auf der Bohrungsinnenfläche des Maschinengehäuse abrollen können, in welchem sie sich befinden.

Das Tragbahnelement braucht nicht nur einrillig zu sein. An ihm können sich auch mehrere parallele Laufbahnen für Kugeln von Tragabschnitten befinden. Eine vereinfachte Herstellung und Montage der Käfigsegmentgehäuse wird dadurch erreicht, daß jeweils das äußere Käfigteil des Käfigsegmentgehäuses als an dem Tragbahnelement angespritztes Kunststoffteil ausgebildet ist. Durch den exakt definierten Sitz des Tragbahnelementes im Segmentgehäuse ergibt sich ein verbesserter Kugelumlauf (geringere Geräuschentwicklung), eine genaue stoßfreie Führung der Kugeln beim Eintritt in den belasteten Bereich und eine Reduzierung der Verschiebekraftpulsation. Es ist dadurch nicht mehr notwendig, an den Enden der Tragbahnelemente spezielle Einlaufgeometrien (Einlaufphasen) auszubilden. Es ist auch möglich, das aus einem äußeren Käfigteil und einem inneren Käfigteil bestehende Käfigsegmentgehäuse als einstückiges Kunststoffteil an dem Tragbahnelement anzuspritzen. Durch ein Anspritzen oder Anformen vermindert sich die Anzahl der zu montierenden Teile.

Durch die Einteiligkeit von Tragbahnelement und Käfigsegmentgehäuse liegt eine kraftschlüssige Verbindung vor, die es ermöglicht, Teile der Kugelumlenkung, die im angespritzten Kunststoffteil ausgebildet sind, in den lasttragenden Bereich mit einzubeziehen. So kann der Übergang "Kugelumlenkung - Tragbahnelement" in radialer Richtung zur Führungsschiene so ausgebildet werden, daß im unbelasteten Zustand im Kunststoffteil eine gegenüber dem Tragbahnelement erhöhte Stufe oder Rampe entsteht. Diese muß so dimensioniert sein, daß bei Berücksichtigung der unterschiedlichen Eindringtiefen der Kugeln in Stahl und Kunststoff die Stufe oder Rampe unter Belastung verschwindet.

Die Käfighülse kann zwei Stirnringe aufweisen, die sich in zur Längsrichtung der Führungsschiene senkrechten Ebenen erstrecken, mit an jedem Stirnring ausgebildeten Paaren von im wesentlichen parallen, federnde Bereiche bildenden Schlitzen, wobei jedes Käfigsegmentgehäuse an seinen beiden in Längsrichtung der Führungsschiene weisenden Stirnseiten von zwei einander entsprechenden federnden Bereichen der beiden Stirnringe gehalten ist. Dabei können die Käfigsegmentgehäuse beispielsweise mit in Öffnungen der federnden Bereiche eingesteckten stirnseitigen Noppen in der Käfighülse gehalten sein. Es ist aber auch möglich, daß die Käfigsegmentgehäuse mit stirnseitigen Klebe- oder Schweißflächen an den federnden Bereichen der Käfighülse befestigt sind. Auf diese Weise erhält man ein System zur Einbringung der Käfigsegmentgehäuse in die Käfighülse, welches die Beweglichkeit der einzelnen Gehäuse ermöglicht und eine Verdrehsicherung bietet, so daß die Gehäuse immer in definierter Stellung sind, bevor die gefüllte Käfighülse auf die Führungsschiene geschoben wird. Außerdem wirkt das System spielfrei und ermöglicht eine definierte Vorspannung der Käfigsegmentgehäuse. Dabei werden die Gehäuse zur Führungsschiene hin oder von der Führungsschiene weg zu dem die Käfighülse aufnehmenden Maschinengehäuse hin angefedert.

Um ein wartungsfreies bzw. wartungsarmes Linearwälzlager zu erhalten, können die Käfigsegmentgehäuse jeweils im Bereich eines Tragabschnitts der Kugeln und/oder eines Rücklaufabschnitts der Kugeln als Fettreservoir verwendbare Hohlräume aufweisen.

Ein dauerfester Zusammenhalt des Käfigsegmentgehäuses wird auch dadurch erreicht, daß das innere Käfigteil seitliche Aussparungen aufweist, in welche seitliche Noppen des in das innere Käfigteil eingesteckten äußeren Käfigteils eingerastet sind.

### Kurze Beschreibung der Zeichnung

Ausführungsbeispiele der Erfindung sind in der Zeichnung dargestellt und werden im folgenden näher beschrieben. Es zeigen
- Figur 1: ein erfindungsgemäßes Linearwälzlager in explosionsartiger perspektivischer Darstellung;
- Figur 2: eine Käfighülse des Lagers in einer Seitenansicht;
- Figur 3: einen Querschnitt durch die Käfighülse gemäß Linie III-III der Figur 2;
- Figur 4: eine vergrößerte Darstellung des Bereichs einer mit einer Federlippe versehenen Aussparung der Käfighülse;
- Figur 5: ein Käfigsegmentgehäuse, welches an einer Führungsschiene abgestützt ist, im Querschnitt;
- Figur 6: ein gegenüber Figur 5 abgewandeltes Käfigsegmentgehäuse im Querschnitt;
- Figur 7: eine gegenüber Figur 3 abgewandelte Käfighülse in stirnseitiger Ansicht;
- Figur 8: eine weitere gegenüber Figur 3 abgewandelte Käfighülse in stirnseitiger Ansicht.

### Ausführliche Beschreibung der Zeichnung

Ein erfindungsgemäßes Linearwälzlager enhält eine Käfighülse 1, welche eine Führungsschiene 2 umgibt. Die Führungsschiene 2 ist im Querschnitt kreisförmig ausgebildet und die Käfighülse 1 ist ein Zylinderkörper, der an seinem Umfang fünf gleiche Ausnehmungen 3 aufweist, die sich in Umfangsrichtung in Abständen hintereinander befinden. Diese Ausnehmungen 3 sind radial durchgehend ausgeführt, so daß sich parallele Käfigstäbe 4 ergeben, die zwei Stirnringe 5 der Käfighülse 1 miteinander verbinden.

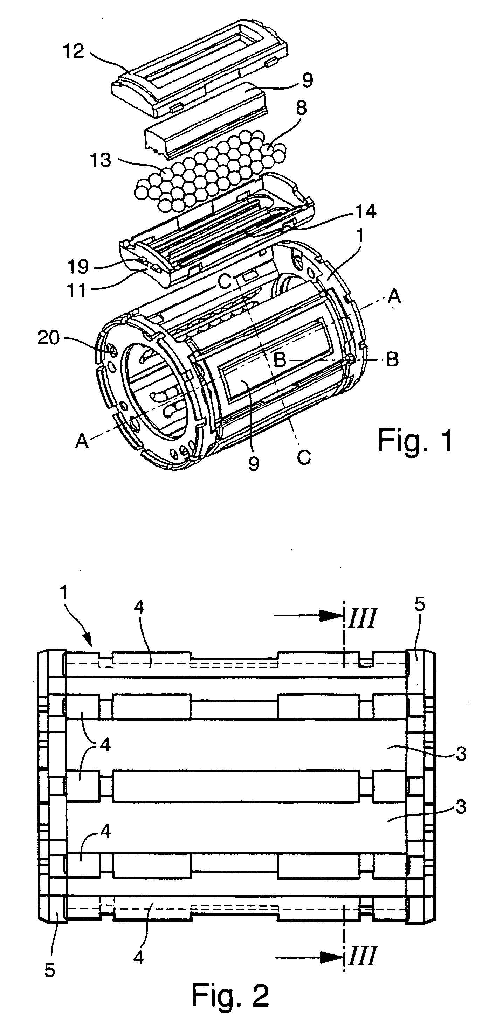

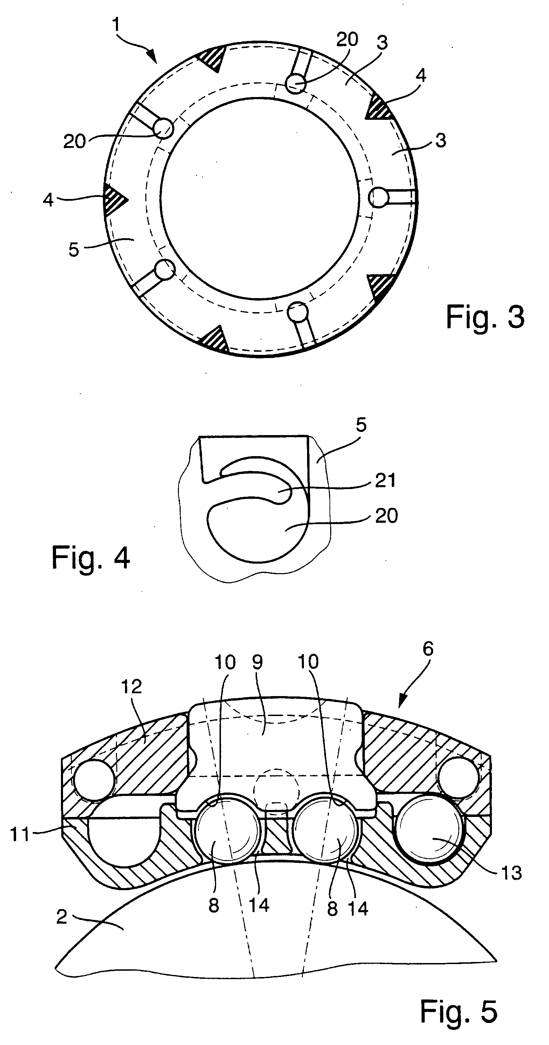

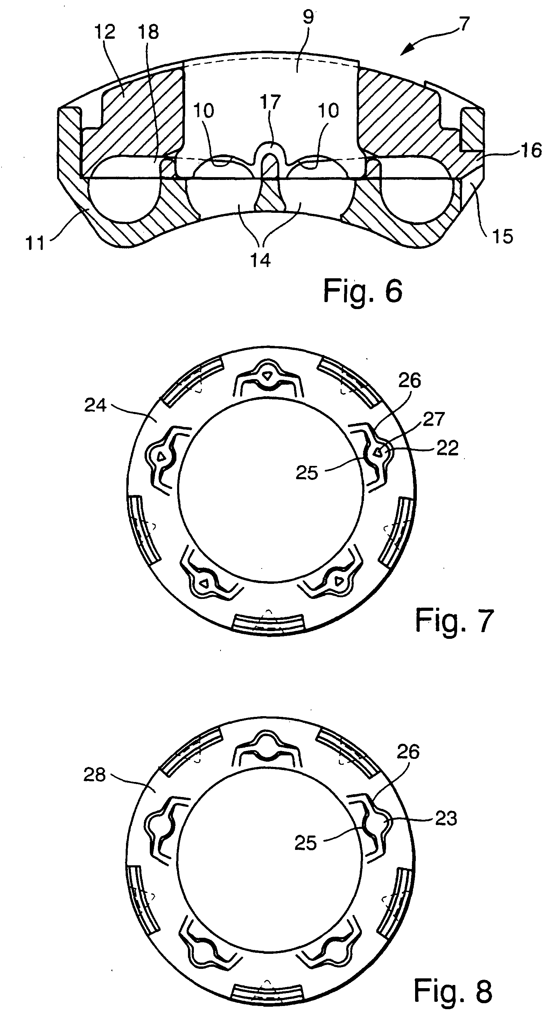

In jede Ausnehmung 3 der Käfighülse 1 ist ein Käfigsegmentgehäuse 6, wie in Figur 5 dargestellt, oder ein Käfigsegmentgehäuse 7, wie in Figur 6 dargestellt, eingesetzt. Jedes Käfigsegmentgehäuse enthält zwei endlose Kugelumläufe. Figur 1 zeigt die Teile des Käfigsegmentgehäuses 7. Bei beiden Käfigsegmentgehäusen 6 und 7 stützen sich Kugeln 8 des Tragabschnitts eines Umlaufes sowohl an der Führungsschiene 2 als auch an einem in dem Käfigsegmentgehäuse eingesetzten Tragbahnelement 9 ab und können in Längsrichtung der Führungsschiene 2 sowie des Tragbahnelementes abrollen. Zu diesem Zweck sind in dem Tragbahnelement 9 Laufbahnen 10 eingearbeitet, wie aus den Figuren 5 und 6 hervorgeht.

Jedes Käfigsegmentgehäuse 6 bzw. 7 besteht aus einem inneren Käfigteil 11 und einem darin eingesetzten äußeren Käfigteil 12. Diese Teile sind ebenso, wie die Käfighülse 1, Kunststoffteile und enthalten Kanäle zur Aufnahme von zwei Kugelumläufen, also von Kugeln 8 der Tragabschnitte, von Kugeln 13 der Rücklaufabschnitte und von Kugeln der Umlenkabschnitte. Jedes innere Käfigteil 11 weist zwei in Längsrichtung der Führungsschiene 2 sich erstreckende Schlitze 14 auf, durch welche die Kugeln 8 der Tragabschnitte hindurchragen, um die Oberfläche der Führungsschiene 2 berühren zu können. Das sich ebenfalls in Längsrichtung der Führungsschiene 2 erstreckende Tragbahnelement 9 ist in einem Durchbruch des äußeren Käfigteils 12 angeordnet und dort gehalten. Wie aus Figur 6 hervorgeht, sind das innere Käfigteil 11 und das äußere Käfigteil 12 dadurch zusammengehalten, daß an den Längsseiten des inneren Käfigteils 11 seitliche Aussparungen 15 vorgesehen sind, in welchen seitliche Noppen 16 des äußeren Käfigteils 12 eingerastet sind. Diese Ausführung weist außerdem einen in Längsrichtung verlaufenden Hohlraum 17 im Bereich der Tragabschnitte und Hohlräume 18 in den Bereichen der Rücklaufabschnitte der Kugelumläufe auf. Diese Hohlräume dienen zur Aufnahme von Schmierstoff für die abrollenden Kugeln 8 bzw. 13.

Jedes Käfigsegmentgehäuse 6 bzw. 7 ist in seiner Ausnehmung 3 der Käfighülse 1 geringfügig schwenkbar eingehängt, damit die Kugeln 8 der Tragabschnitte und die Tragbahnelemente 9 sich auf die Oberfläche und den Verlauf der Führungschiene 2 während der Abrollbewegung einstellen können. Zu diesem Zweck weist das innere Käfigteil 11 an jeder Stirnseite eine abstehende Noppe 19 auf, beide Noppen 19 eines inneren Käfigteils 11 sind fluchtend angeordnet. Zur Aufnahme dieser Noppen 19 weisen die Stirnringe 5 der Käfighülse 1 fluchtende Aussparungen 20 auf. Diese sind im Durchmesser größer ausgeführt als die Noppen 19, so daß auch hierdurch eine Einstellmöglichkeit des gesamten Käfigsegmentgehäuses 6 bzw. 7 innerhalb der Käfighülse 1 gegeben ist. Wie Figur 4 zeigt, kann in eine Aussparung 20 jeweils eine Federlippe 21 hineinragen, welche auf das Käfigsegmentgehäuse 6 bzw. 7 über die Noppen 19 radial zur Führungsschiene 2 hin einwirkt oder auf das Käfigsegmentgehäuse eine Kraft in der entgegengesetzten Richtung ausübt. Die Bewegungsmöglichkeiten der Käfigsegmentgehäuse sind in Figur 1 durch die Achsen A-A, B-B, C-C dargestellt.

Die geringfügig bewegliche Einhängung der Käfigsegmentgehäuse 6 bzw. 7 in der Käfighülse 1 kann gemäß den Figuren 7 und 8 auch dadurch erfolgen, daß in die Stirnringe der Käfighülse 1 Schlitze eingebracht werden, so daß sich federnde Bereiche 22 und 23 ergeben. So zeigt Figur 7 einen Stirnring 24 einer Käfighülse, in dem die federnde Bereiche 22 jeweils von einem inneren Schlitz 25 und einem dazu im wesentlichen parallelen äußeren Schlitz 26 gebildet wird. Jeder federnde Bereich 22 weist in der Mitte eine Öffnung 27 auf, in welche eine Noppe 19 des benachbarten Käfigsegmentgehäuses 6 bzw. 7 eingesteckt ist. Die Stirnringe 28 gemäß Figur 8 einer Käfighülse sind im wesentlichen ebenso gestaltet, denn die federnden Bereiche 23 werden hier ebenfalls von inneren Schlitzen 25 und äußeren Schlitzen 26 begrenzt. Hier wird die Verbindung der Käfigsegmentgehäuse 6 bzw. 7 mit den Stirnringen 28 dadurch geschaffen, daß die Käfigsegmentgehäuse an den federnden Bereichen 23 angeklebt oder angeschweißt werden.

### Bezugszahlenliste

- 1: Käfighülse
- 2: Führungsschiene
- 3: Ausnehmung
- 4: Käfigstab
- 5: Stirnring
- 6: Käfigsegmentgehäuse
- 7: Käfigsegmentgehäuse
- 8: Kugel des Tragabschnitts
- 9: Tragbahnelement
- 10: Laufbahn
- 11: inneres Käfigteil
- 12: äußeres Käfigteil
- 13: Kugel des Rücklaufabschnitts
- 14: Schlitz
- 15: seitliche Aussparung
- 16: seitliche Noppe
- 17: Hohlraum
- 18: Hohlraum
- 19: Noppe
- 20: Aussparung
- 21: Federlippe
- 22: federnder Bereich
- 23: federnder Bereich
- 24: Stirnring
- 25: innerer Schlitz
- 26: äußerer Schlitz
- 27: Öffnung
- 28: Stirnring
- A-A: Achse
- B-B: Achse
- C-C: Achse

## Patentansprüche

1. Linearwälzlager mit mehreren Kugelumläufen, welche eine Führungsschiene (2) umgebend in Umfangsrichtung hintereinander angeordnet sind, wobei jeweils mindestens ein Kugelumlauf, bestehend aus einem Tragabschnitt, einem Rücklaufabschnitt und zwei diese Abschnitte miteinander verbindenden Umlenkabschnitten, in einem Käfigsegmentgehäuse (6, 7) gehalten ist, das von einem inneren Käfigteil (11) und einem äußeren Käfigteil (12) gebildet ist und ein in einem Durchbruch des äußeren Käfigteils (12) passend eingesetztes Tragbahnelement (9) enthält, wobei ferner die Kugeln (8) des Tragabschnitts einerseits an einer Laufbahn (10) des Tragbahnelementes (9) und andererseits durch einen Schlitz (14) des inneren Käfigteils (11) hindurchragend an der Führungsschiene (2) in deren Längsrichtung abrollbar abgestützt sind, **dadurch gekennzeichnet, daß** jedes Käfigsegmentgehäuse (6, 7) einzeln in einer Ausnehmung (3) einer die Führungsschiene (2) umgebenden kreiszylindrischen Käfighülse (1) in radialer Richtung einsetzbar und herausnehmbar angeordnet ist.

2. Wälzlager nach Anspruch 1, **dadurch gekennzeichnet, daß** das innere Käfigteil (11) an seinen beiden in Längsrichtung der Führungsschiene (2) weisenden Stirnseiten je einen abstehenden Noppen (19) aufweist, welcher in einer ihm zugeordneten Aussparung (20) der Käfighülse (1) eingerastet ist.

3. Wälzlager nach Anspruch 2, **dadurch gekennzeichnet, daß** die Käfighülse (1) jeweils eine in die Aussparung (3) hineinragende, in radialer Richtung der Hülse auf die eingerastete Noppe (19) einwirkende Federlippe (21) aufweist.

4. Wälzlager nach Anspruch 1, **dadurch gekennzeichnet, daß** an einem Tragbahnelement (9) mehrere parallele Laufbahnen (10) für Kugeln (8) von Tragabschnitten ausgebildet sind.

5. Wälzlager nach Anspruch 1, **dadurch gekennzeichnet, daß** das äußere Käfigteil (12) des Käfigsegmentgehäuses (6, 7) als an dem Tragbahnelement (9) angespritztes Kunststoffteil ausgebildet ist.

6. Wälzlager nach Anspruch 1, **dadurch gekennzeichnet, daß** das aus einem äußeren Käfigteil und einem inneren Käfigteil bestehende Käfigsegmentgehäuse als einstückiges Kunststoffteil an dem Tragbahnelement angespritzt ist.

7. Wälzlager nach Anspruch 2, **dadurch gekennzeichnet, daß** die Käfighülse zwei Stirnringe (24, 28) aufweist, die sich in zur Längsrichtung der Führungsschiene (2) senkrechten Ebenen erstrecken, mit an jedem Stirnring (24, 28) ausgebildeten Paaren von im wesentlichen parallelen, federnde Bereiche (22, 23) bildenden Schlitzen (25, 26), wobei jedes Käfigsegmentgehäuse (6, 7) mit seinen beiden in Längsrichtung der Führungsschiene (2) weisenden Stirnseiten von zwei einander entsprechenden federnden Bereichen (22, 23) der beiden Stirnringe (24, 28) gehalten ist.

8. Wälzlager nach Anspruch 7, **dadurch gekennzeichnet, daß** die Käfigsegmentgehäuse (6, 7) mit ihren in Öffnungen (27) der federnden Bereiche (22) eingesteckten stirnseitigen Noppen (19) in der Käfighülse gehalten sind.

9. Wälzlager nach Anspruch 7, **dadurch gekennzeichnet, daß** die Tragbahnelemente mit stirnseitigen Klebe- oder Schweißflächen an den federnden Bereichen (23) der Käfighülse befestigt sind.

10. Wälzlager nach Anspruch 1, **dadurch gekennzeichnet, daß** die Käfigsegmentgehäuse (7) jeweils im Bereich eines Tragabschnittes der Kugeln (8) und/oder eines Rücklaufabschnittes der Kugeln (13) als Fettreservoir verwendbare Hohlräume (17, 18) aufweisen.

11. Wälzlager nach Anspruch 1, **dadurch gekennzeichnet, daß** das innere Käfigteil (11) seitliche Aussparungen (15) aufweist, in welche seitliche Noppen (16) des in das innere Käfigteil (11) eingesteckten äußeren Käfigteils (12) eingerastet sind.

## Claims

1. Linear rolling bearing comprising a plurality of ball circuits which are arranged around a guide rail (2) behind one another in peripheral direction, at least one ball circuit consisting of a load-bearing section, a returning section and two deflecting sections that connect these sections to each other being retained in each segmental cage housing (6, 7) that is formed by an inner cage part (11) and an outer cage part (12) and contains a load-bearing raceway element (9) that is fitted into a through-aperture of the outer cage part (12), the balls (8) of the load-bearing section being supported on one side on a raceway (10) of the load-bearing raceway element (9) and on the other side, while projecting through a slot (14) of the inner cage part (11), on the guide rail (2) for rolling in the longitudinal direction thereof, **characterised in that** each segmental cage housing (6, 7) is arranged separately in a recess (3) of a circular cylindrical cage bushing (1) that surrounds the guide rail (2), and each segmental cage (6, 7) housing can be inserted into and removed from said recess in radial direction.

2. Rolling bearing according to claim 1, **characterised in that** the inner cage part (11) comprises, on each of its two ends pointing in the longitudinal direction of the guide rail (2), a protruding knob (19) that is snapped into an associated recess (20) of the cage bushing (1).

3. Rolling bearing according to claim 2, **characterised in that** the cage bushing (1) comprises spring lips (21) each of which extends into one of the recesses (3) and acts in radial direction of the bushing on the snapped-in knob (19).

4. Rolling bearing according to claim 1, **characterised in that** a plurality of parallel raceways (10) for balls (8) of load-bearing sections are configured on a load-bearing raceway element (9).

5. Rolling bearing according to claim 1, **characterised in that** the outer cage part (12) of the segmental cage housing (6, 7) is configured as a plastic part injected onto the load-bearing raceway element (9).

6. Rolling bearing according to claim 1, **characterised in that** the segmental cage housing consisting of an outer cage part and an inner cage part is injected as a one-piece plastic part onto the load-bearing raceway element.

7. Rolling bearing according to claim 2, **characterised in that** the cage bushing comprises two end rings (24, 28) that extend in planes perpendicular to the longitudinal direction of the guide rail (2), pairs of substantially parallel slots (25, 26) that form resilient regions (22, 23) being provided on each end ring (24, 28), and each segmental cage housing (6, 7) being retained with its two ends pointing in the longitudinal direction of the guide rail (2) by two corresponding resilient regions (22, 23) of the two end rings (24, 28).

8. Rolling bearing according to claim 7, **characterised in that** the segmental cage housings (6, 7) are retained in the cage bushing by their end knobs (19) that are inserted into openings (27) of the resilient regions (22).

9. Rolling bearing according to claim 7, **characterised in that** that the load-bearing raceway elements are fixed on the resilient regions (23) of the cage bushing by gluing or welding end surfaces.

10. Rolling bearing according to claim 1, **characterised in that,** in the region of a load-bearing section of the balls (8) and/or in the region of a returning section of the balls (13), the segmental cage housings (7) comprise hollow spaces (17, 18) that can be used as grease reservoirs.

11. Rolling bearing according to claim 1, **characterised in that** the inner cage part (11) comprises side recesses (15) into which side knobs (16) of the outer cage part (12), that is inserted into the inner cage part (11), are snapped.

## Revendications

1. Palier linéaire à roulement comprenant plusieurs circulations de billes qui sont agencées autour d'un rail de guidage (2), l'une derrière l'autre, dans la direction périphérique, au moins une circulation de billes comprenant une zone portante, une zone de retour et deux zones de renvoi qui relient ces deux zones, l'une à l'autre, étant retenue à chaque fois dans un boîtier segmenté (6, 7) de cage qui est formé par une partie interne (11) de cage et une partie externe (12) de cage et qui contient un élément (9) à piste sous charge qui est inséré de manière ajustée dans un perçage de la partie externe (12) de cage, les billes (8) de la zone portante étant supportées, d'un côté, sur une piste (10) de roulement de l'élément (9) à piste sous charge et, de l'autre côté, en s'étendant au travers d'une lumière (14) de la partie interne (11) de cage, sur le rail de guidage (2) pour rouler dans la direction longitudinale de celui-ci, **caractérisé en ce que** chaque boîtier segmenté (6, 7) de cage est agencé séparément dans un évidement (3) d'une douille (1) de cage de forme cylindrique circulaire qui entoure le rail de guidage (2), et chaque boîtier segmenté (6, 7) de cage peut être inséré et ôté dans ledit évidement dans la direction radiale.

2. Palier à roulement selon la revendication 1, **caractérisé en ce que** la partie interne (11) de cage comprend, sur chacune de ses deux extrémités frontales orientées dans la direction longitudinale du rail de guidage (2), un bouton (19) en saille qui est encliqueté dans une cavité (20) associée de la douille (1) de cage.

3. Palier à roulement selon la revendication 2, **caractérisé en ce que** la douille (1) de cage comprend des lèvres à ressort (21) dont chacune fait saillie dans un des évidements (3) et agit dans la direction radiale de la douille sur le bouton (19) encliqueté.

4. Palier à roulement selon la revendication 1, **caractérisé en ce que** plusieurs pistes (10) parallèles de roulement pour des billes (8) de zones portantes sont configurées sur un élément (9) à piste sous charge.

5. Palier à roulement selon la revendication 1, **caractérisé en ce que** la partie externe (12) de cage du boîtier segmenté (6, 7) de cage est configurée sous la forme d'une partie en matière plastique injectée sur l'élément (9) à piste sous charge.

6. Palier à roulement selon la revendication 1, **caractérisé en ce que** le boîtier segmenté de cage qui est formé par la partie externe de cage et par la partie interne de cage est injecté sous la forme d'une partie d'un seul tenant en matière plastique sur l'élément à piste sous charge.

7. Palier à roulement selon la revendication 2, **caractérisé en ce que** la douille de cage comprend deux bagues frontales (24, 28) qui s'étendent dans des plans qui sont perpendiculaires à la direction longitudinale du rail de guidage (2), chaque bague frontale (24, 26) comprend des paires de lumières (25, 26) qui sont globalement parallèles, l'une à l'autre, et forment des régions élastiques (22, 23), et chaque boîtier segmenté de cage (6, 7) est retenu avec ses deux extrémités orientées dans la direction longitudinale du rail de guidage (2) par deux régions élastiques (22, 23) correspondantes, l'une à l'autre, des deux bagues frontales (24, 28).

8. Palier à roulement selon la revendication 7, **caractérisé en ce que** les boîtiers segmentés (6, 7) de cage sont retenus dans la douille de cage par leurs boutons (19) frontaux qui sont insérés dans des ouvertures (27) des régions élastiques (22).

9. Palier à roulement selon la revendication 7, **caractérisé en ce que** les éléments à piste sous charge sont fixés sur les régions élastiques (23) par des surfaces de collage ou de soudage.

10. Palier à roulement selon la revendication 1, **caractérisé en ce que,** dans la région d'une zone portante des billes (8) et/ou dans la région d'une zone de retour des billes (13), les boîtiers segmentés (7) de cage comprennent des espaces vides (17, 18) qui peuvent être utilisés en tant que réservoirs de graisse.

11. Palier à roulement selon la revendication 1, **caractérisé en ce que** la partie interne (11) de cage comprend des cavités latérales (15) dans lesquelles sont encliquetés des boutons latéraux (16) de la partie externe (12) de cage qui est insérée dans la partie interne (11) de cage.
